# EUROPÄISCHE PATENTSCHRIFT

(11) **EP 2 445 670 B1**
(45) Veröffentlichungstag und Bekanntmachung des Hinweises auf die Patenterteilung: **22.05.2019**
(21) Anmeldenummer: 10726956.5
(22) Anmeldetag: 22.06.2010
(51) Int. Cl.: B22F 3/10, B22F 3/22, C04B 35/111, C04B 35/14, C04B 35/46, C04B 35/478, C04B 35/486, C04B 35/505, C04B 35/56, C04B 35/563, C04B 35/565, C04B 35/58, C04B 35/581, C04B 35/583, C04B 35/584, C04B 35/638, C04B 35/634

(54) **VERFAHREN ZUM KONTINUIERLICHEN THERMISCHEN ENTBINDERN EINER THERMOPLASTISCHEN FORMMASSE**
METHOD FOR THE CONTINUOUS THERMAL DEBINDING OF A THERMOPLASTIC MOLDING COMPOUND
PROCÉDÉ DE DÉLIANTAGE THERMIQUE CONTINU D UNE MATIÈRE MOULABLE THERMOPLASTIQUE

(30) Priorität: 25.06.2009 EP 09163770
(43) Veröffentlichungstag der Anmeldung: 02.05.2012
(73) Patentinhaber: BASF SE, 67056 Ludwigshafen am Rhein (DE)
(72) Erfinder: TER MAAT, Johan Herman Hendrik, 68163 Mannheim (DE); WOHLFROMM, Hans, 68163 Mannheim (DE); BLÖMACHER, Martin, 67149 Meckenheim (DE); THOM, Arnd, 55232 Alzey (DE); KERN, Andreas, 68259 Mannheim (DE)
(86) Internationale Anmeldenummer: PCT/EP2010/058802
(87) Internationale Veröffentlichungsnummer: WO 2010/149648

(56) Entgegenhaltungen:
- US-A- 5 366 679
- US-A1- 2003 220 424
- US-A1- 2008 075 620

## Beschreibung

Die vorliegende Erfindung betrifft ein Verfahren zum kontinuierlichen thermischen Entbindern eines durch Spritzgießen, Extrudieren oder Verpressen unter Verwendung einer thermoplastischen Masse hergestellten metallischen und/oder keramischen Formkörpers, der als Bindemittel mindestens ein Polyoxymethylenhomo- oder copolymerisat enthält. Die Erfindung betrifft ferner eine Vorrichtung zur Durchführung des erfindungsgemäßen Verfahrens.

Metallische und/oder keramische Formkörper, die als Hilfsmittel (Bindemittel) zur Formgebung Polyoxymethylenhomo- oder copolymerisate (Polyacetale) enthalten, werden nach der Formgebung in der Regel in einem katalytischen Verfahrensschritt entbindert, ohne dass die Formkörper selbst ihre Form verändern. Dabei wird unter Mitwirkung eines Reaktionspartners wie Salzsäure oder Salpetersäure in einem Trägergas, unter geeigneten Prozessbedingungen, insbesondere hinsichtlich Temperatur, das verwendete Bindemittel in niedrigmolekulare, in gasförmigem Zustand vorliegende Bestandteile zersetzt und diese durch Abfackeln in umweltverträgliche Verbindungen umgewandelt. Insbesondere die Verwendung saurer Reaktionspartner wie Salpetersäure stellt jedoch hohe apparative Anforderungen an die eingesetzten Entbinderungsöfen und ist deshalb in Ihrer Handhabung aufwändig.

Beispiele für eine derartige katalytische Entbinderung finden sich unter anderem in EP 0 697 931 A1, EP 0 595 099 A1, EP 0 701 875 A1 und EP 0 652 190 A1.

Für "säurelabile" Werkstoffe, wie Cu-, Co,- Mg-, aber auch MgO- oder Si₃N₄-basierte oder -enthaltende Werkstoffe allerdings ist das katalytische Entbinderungsverfahren nicht immer geeignet. Als Alternative zu diesem Verfahren konnte in der Vergangenheit gezeigt werden, dass Polyacetale auch rein thermisch aus dem Formkörper herausgelöst werden können.

So offenbart die EP 0 114 746 A2 ein Verfahren zur thermischen Entbinderung von Polyacetalen enthaltenden Formkörpern durch einstufiges Aufheizen der nach dem Spritzgießen erhaltenen Formkörper (sog. Grünlinge) auf eine Temperatur im Bereich von 20 bis 300°C mit einer Aufheizgeschwindigkeit von 5 bis 20°C bzw. > 100°C pro Stunde. Ein solches thermisches Entbinderungsverfahren hat jedoch insbesondere bei größeren Formkörpern den Nachteil, dass es zu Blasen- und Rissbildung im Formkörper kommen kann, was ein solches Formteil häufig unbrauchbar macht.

Weitere Verfahren zur thermischen Entbinderung von Polyacetalen enthaltenden Formkörpern sind in US 2008/0075620 und US2003/0220424 offenbart.

Aufgabe der vorliegenden Erfindung ist es daher, ein umweltfreundliches, kontinuierliches Verfahren zur thermischen Entbinderung bereitzustellen, bei dem die oben genannten Nachteile des Stands der Technik vermieden werden.

Diese Aufgabe wird gelöst durch ein Verfahren zum kontinuierlichen thermischen Entbindern eines durch Spritzgießen, Extrudieren oder Verpressen unter Verwendung einer thermoplastischen Masse hergestellten metallischen und/oder keramischen Formkörpers, enthaltend als Bindemittel mindestens ein Polyoxymethylenhomo- oder copolymerisat, in einem Entbinderungsofen umfassend die Schritte
(a) Entbindern des Formkörpers in einem Entbinderungsofen bei einer Temperatur die 5 bis 20 °C, bevorzugt 10 bis 15 °C unterhalb der Temperatur einer zweiten Temperaturstufe liegt über einen Zeitraum von 4 bis 12 Stunden in einer ersten Temperaturstufe in sauerstoffhaltiger Atmosphäre,
(b) Entbindern des Formkörpers bei einer Temperatur im Bereich von > 160 bis 200°C über einen Zeitraum von 4 bis 12 h in sauerstoffhaltiger Atmosphäre in einer zweiten Temperaturstufe, und
(c) Entbindern des Formkörpers bei einer Temperatur im Bereich von 200 bis 600 °C über einen Zeitraum von 2 bis 8 h in einer dritten Temperaturstufe, in sauerstoffhaltiger oder in neutraler oder reduzierender Atmosphäre,
wobei der Formkörper während der Verfahrensschritte (a) und (b) durch den Entbinderungsofen transportiert wird.

Wird Verfahrensschritt (c) wie auch die Verfahrensschritte (a) und (b) in sauerstoffhaltiger Atmosphäre durchgeführt, so wird gemäß einer bevorzugten Ausführungsform der Erfindung auch dieser Verfahrensschritt (c) in dem in Verfahrensschritten (a) und (b) verwendeten Entbinderungsofen durchgeführt. Ist dies nicht tolerierbar, so wird dieser Verfahrensschritt vorteilhafterweise im nachgeschalteten Sinterverfahren integriert.

Es wurde nämlich festgestellt, dass das erfindungsgemäße Verfahren die kontinuierliche thermische Entbinderung von Formkörpern ermöglicht, wobei auf den Einsatz saurer Reaktionspartner als Katalysatoren zur Zersetzung der Binder gänzlich verzichtet werden kann.

Die Wahl der Temperatur der zweiten Temperaturstufe, Verfahrensschritt (b), richtet sich nach der Korngröße und Packungsdichte der Formkörper. Darüber hinaus spielen sowohl der gewählte Binder als auch die Legierung eine wichtige Rolle bei der Auswahl der Entbinderungstemperatur in Verfahrensstufe (b). Handelt es sich bei dem Formkörper beispielsweise um einen Kupferformkörper in POM, so beträgt die bevorzugte Temperatur in Verfahrensschritt (b) etwa 200 °C. Die Haltezeit beträgt 3 bis 8 Stunden, bevorzugt 5 bis 7 Stunden. Handelt es sich um eine W-Cu-Legierung in POM mit 10 Gew.-% Cu-Anteil, bezogen auf die Legierung, so beträgt die bevorzugte Temperatur in Verfahrensschritt (b) etwa 175 °C. Die Haltezeit beträgt 4 bis 10 Stunden, bevorzugt 6 bis 8 Stunden. Handelt es sich um eine ZrO₂-Keramik in POM, so beträgt die bevorzugte Temperatur in Verfahrensschritt (b) etwa 160 °C. Die Haltezeit beträgt 6 bis 12 Stunden, bevorzugt 8 bis 10 Stunden.

Der dritte Entbinderungsschritt, Verfahrensschritt (c), bewirkt, dass die nach den Verfahrensschritten (a) und (b) verbliebene organischen Bestandteile nahezu vollständig aus dem Formteil entfernt werden. Vorteilhafterweise wird hierdurch die Freisetzung von kohlenstoffhaltigen Zersetzungsprodukten aus dem Formteil während des nachfolgenden Sinterns des Formteils erheblich verringert, wodurch die bei der Sinterung eingesetzten Öfen deutlich weniger verschmutzt werden.

Ferner wird gemäß der vorliegenden Erfindung ein Verfahren zur Herstellung von metallischen und/oder keramischen Formkörpern aus einer thermoplastischen Masse, durch
(d) Verformen der thermoplastischen Masse durch Spritzgießen, Extrudieren oder Verpressen zu einem Grünkörper,
(e) Entfernen des Bindemittels, wie vorstehend beschrieben und
(f) nachfolgendes Sintern des in Schritt (e) entbinderten Grünkörpers bereitgestellt.

Unter dem Begriff "Entbinderungsofen" ist im Sinne der vorliegenden Erfindung ein Ofen bzw. eine Ofenanlage mit einer oder mehreren Kammern zu verstehen. Die entsprechenden Öfen werden im nachfolgenden Teil der Beschreibung näher beschrieben.

Unter metallischen Formkörpern im Sinne der vorliegenden Erfindung sind solche Bauteile zu verstehen, die durch Spritzgießen, Extrudieren oder Verpressen von metallpulverhaltigen thermoplastischen Formmassen erhältlich sind. Beispiele für Metallpulver sind Pulver von Fe, Al, Cu, Nb, Ti, Mn, V, Ni, Cr, Co, Mo, W und Si. Die Metallpulver können ebenso in Form von Legierungen eingesetzt werden, beispielsweise als Kupfer-basierte Legierungen wie Messing, Bronze, Monel™ und Legierungen mit einem hohen Co-Anteil, wie Kovar™ und Permendur™. Selbstverständlich können auch Mischungen der genannten Metalle verwendet werden.

Bevorzugte metallische Formkörper im Sinne der vorliegenden Erfindung sind solche, die aus Pulverspritzgussmassen, besonders bevorzugt aus Pulverspritzgussmassen von Kupfer-basierten Legierungen wie Reinkupfer, Monel™ und W-Cu-Legierungen erhältlich sind.

Unter keramischen Formkörpern sind solche Teile zu verstehen, die durch Spritzgießen, Extrudieren oder Verpressen von thermoplastischen Formmassen oxidischer keramischer Pulver, beispielsweise Pulver von Al₂O₃, Y₂O₃, SiO₂, ZrO₂, TiO₂ oder Al₂TiO₅ erhältlich sind. Weiterhin eignen sich nicht-oxidische, keramische Pulver wie Si₃N₄, SiC, BN, B₄C, AlN, TiC, TiN, TaC und WC. Selbstverständlich können auch Mischungen der genannten keramischen Materialien und Mischungen von Keramiken und Metallen wie beispielsweise Hartmetalle (WC und Co) verwendet werden.

Bevorzugte keramische Formkörper im Sinne der vorliegenden Erfindung sind solche, die aus Al₂O₃-, ZrO₂- oder Si₃N₄- haltigen thermoplastischen Formmassen erhältlich sind. Auch WC-Co-Mischungen stellen wegen der bereits vorstehend erwähnten Reaktivität des Co eine bevorzugte Keramik-Metall-Pulvermischung dar.

Die Begriffe "Spritzgießen" (oder auch Pulverspritzguss genannt), "Extrudieren" und "Verpressen" sind im Sinne der vorliegenden Erfindung Verfahren aus der Pulvertechnologie, insbesondere der Pulvermetallurgie gemeint, bei dem beispielsweise durch Spritzguss einer thermoplastischen Spritzgussmasse, die Metall- oder Keramikpulver und einen Anteil von üblicherweise mindestens 30 Vol.-% eines thermoplastischen Binders enthält, ein Formkörper erzeugt wird, aus dem anschließend der Binder entfernt wird, und der danach zum fertigen Werkstück gesintert wird. Der Metallpulverspritzguss kombiniert die Vorteile der aus der Kunststofftechnik bekannten Formgebung durch Spritzguss oder Extrusion mit denen der klassischen Pulvermetallurgie. Bei der klassischen Pulvermetallurgie (Powder Metallurgy, auch als "P/M" bezeichnet) wird Metallpulver oft mit bis zu 10 Vol.-% Schmiermittel wie Öl oder Wachs versetzt, durch Pressen in die gewünschte Form gebracht und der Pressling wird anschließend gesintert. Der Vorteil der pulvermetallurgischen Verfahren liegt in der Freiheit der Werkstoffauswahl. Mit Hilfe des pulvermetallurgischen Verfahrens können beim Sintern eines Metallpulvergemisches Werkstoffe erzeugt werden, die mit schmelzmetallurgischen Verfahren nicht herstellbar sind. Ein wesentlicher Nachteil der klassischen Pulvermetallurgie durch Pressen und Sintern ist, dass sie nicht zur Herstellung von Werkstücken mit komplexeren geometrischen Formen geeignet ist. Beispielsweise können Formen mit Hinterschneidungen, also Vertiefungen quer zur Pressrichtung, nicht durch Pressen und Sintern erzeugt werden. Beim Spritzguss hingegen kann praktisch jede beliebige Form erzeugt werden. Dagegen ist es ein Nachteil des Metallpulverspritzgusses, dass bei größeren Werkstücken gelegentlich Anisotropien in der Gussform auftreten und dass ein separater Schritt zur Entfernung des Binders durchgeführt werden muss. Der Metallpulverspritzguss wird daher vorwiegend für relativ kleine und kompliziert geformte Werkstücke angewendet.

Die als Bindemittel genannten Polyoxymethylenhomo- und -copolymere sowie ihre Herstellung sind dem Fachmann bekannt und in der Literatur beschrieben. Die Homopolymerisate werden üblicherweise durch Polymerisation (meist katalysierte Polymerisation) von Formaldehyd oder Trioxan hergestellt. Zur Herstellung von Polyoxymethylencopolymeren wird oder werden üblicherweise ein cyclischer Ether oder mehrere cyclische Ether als Comonomer gemeinsam mit Formaldehyd und/oder Trioxan in der Polymerisation eingesetzt, so dass die Polyoxymethylenkette mit ihrer Folge von (-OCH₂)-Einheiten von Einheiten unterbrochen wird, in denen mehr als ein Kohlenstoffatom zwischen zwei Sauerstoffatomen angeordnet ist. Beispiele für als Comonomere geeignete cyclische Ether sind Ethylenoxid, 1,2-Propylenoxid, 1,2-Butylenoxid, 1,3-Dioxan, 1,3-Dioxolan, Dioxepan, lineare Oligo- und Polyformale wie Polydioxolan oder Polydioxepan sowie Oxymethylenterpolymerisate.

Im Allgemeinen besteht das Bindemittel zu mindestens 80 Gew.-% aus Polyoxymethylen (POM), daneben können weitere Polymere enthalten sein, beispielsweise Polystyrol, Polypropylen, Polyethylen und Ethylen/Vinylacetat-Copolymere und auch weitere eventuell notwendige Zuschlagstoffe wie Dispergatoren, Fließhilfsmittel und Formtrennhilfsmittel. Insbesondere die genannten weiteren Polymere, wie Polystyrol, Polypropylen, Polyethylen und Ethylen/Vinylacetat-Copolymere und auch weitere eventuell notwendige Zuschlagstoffe wie Dispergatoren, Fließhilfsmittel und Formtrennhilfsmittel werden in Verfahrensschritt (c) des erfindungsgemäßen Verfahrens aus dem Formteil entfernt.

Derartige Bindemittel sind beispielsweise in EP 446 708 A2, EP 465 940 A2 und WO 01/81467 A1 offenbart.

Erfindungsgemäß wird das kontinuierliche thermische Entbindern in dem Entbinderungsofen unter Anwendung des in den Verfahrensschritten (a) (b) und (c) definierten Temperatur/Zeit-Profils durchgeführt. Verfahrensschritt (c) kann dabei in dem gleichen Ofen, in dem die Verfahrensschritte (a) und (b) durchgeführt wurden, durchgeführt werden. Verfahrensschritt (c) kann jedoch auch in einem separaten Ofen durchgeführt werden.

Gemäß einer bevorzugten Ausführungsform der Erfindung werden die Verfahrensschritte (a), (b) und (c) in dem gleichen Entbinderungsofen durchgeführt. Gemäß dieser Ausführungsform der Erfindung werden die Formteile während der Verfahrensschritte (a), (b) und (c) kontinuierlich durch den Ofen bewegt.

Die kontinuierliche thermische Entbinderung wird erfindungsgemäß in sauerstoffhaltiger Atmosphäre, in Gegenwart von Luftsauerstoff bzw. insbesondere in Gegenwart von Luft durchgeführt. Der Begriff "Atmosphäre" bzw. "Ofenatmosphäre" bedeutet im Sinne der Erfindung Luft bzw. Luft die auf die entsprechende Temperatur erwärmt ist und die Formkörper während der Durchführung des erfindungsgemäßen Verfahrens umgibt.

Gemäß einer bevorzugten Ausführungsform der Erfindung werden die Formkörper während der Verfahrensschritte (a) und (b) oder während des Verfahrensschritts (a) oder während des Verfahrensschritts (b) von der Ofenatmosphäre, also von Luft umströmt. Die gewählte Strömungsgeschwindigkeit kann über weite Bereiche variiert werden und beträgt allgemein > 1 m/s, bevorzugt > 3 m/s und besonders bevorzugt > 5 m/s. Die dabei durch den Entbinderungsofen transportierte Luftmenge hängt dabei von der Dimensionierung des Ofens ab und beträgt allgemein 1 bis 50 m³/h, bevorzugt 15 bis 25 m³/h.

Gemäß einer bevorzugten Ausführungsform der Erfindung werden die Formkörper während des Verfahrensschritts (c) von der Ofenatmosphäre, in diesem Falle von einer Inertgasatmosphäre, beispielsweise von einer Stickstoffatmosphäre oder einer reduzierenden Atmosphäre, beispielsweise einer Wasserstoffatmosphäre umströmt. Die gewählte Strömungsgeschwindigkeit kann über weite Bereiche variiert werden und beträgt allgemein > 1 m/s, bevorzugt > 3 m/s und besonders bevorzugt > 5 m/s. Die dabei durch den Entbinderungsofen transportierte Atmosphäre hängt dabei von der Dimensionierung des Ofens ab und beträgt allgemein 1 bis 50 m³/h, bevorzugt 15 bis 25 m³/h.

Während des erfindungsgemäßen Verfahrens wird der Formkörper bzw. werden die Formkörper während der Verfahrensschritte (a) und (b) kontinuierlich durch den Entbinderungsofen transportiert. Gemäß einer weiteren bevorzugten Ausführungsform der Erfindung wird der Formkörper bzw. werden die Formkörper während der Verfahrensschritte (a) (b) und (c) kontinuierlich durch den Entbinderungsofen transportiert. Der Formkörper wird dabei beispielsweise in einem Chargenträger entlang eines Förderweges durch den Entbinderungsofen transportiert, wobei zur Beförderung beispielsweise ein Bandförderer, eine Gleitbahn bzw. Rollenbahn mit Stoßeinrichtung etc. dienen kann. Die Vorrichtung kann dabei einen Förderweg oder mehrere nebeneinander angeordnete Förderwege aufweisen. Die zu entbindernden Formkörper werden zweckmäßigerweise in gasdurchlässigen Chargenträgern angeordnet, die sich auf einem Förderband bzw. einer Gleitbahn oder Rollenbahn durch den Entbinderungsofen bewegen. Dabei können gemäß einer Ausführungsform der Erfindung mehrere Chargenträger übereinander gestapelt sein. Die Chargenträger sind bevorzugt gasdurchlässig und weisen bevorzugt seitliche Lochwände auf, wodurch ein guter Kontakt der zu entbindernden Formkörper mit der Ofenatmosphäre gewährleistet ist.

Die kontinuierliche thermische Entbinderung findet in Ofenanlagen statt, in denen die Formkörper, auch Grünlinge genannt, in einer sauerstoffhaltigen Atmosphäre, bevorzugt in Luftatomsphäre über definierte Zeiträume definierten Temperaturen ausgesetzt werden. Bevorzugte Öfen sind Entbinderungsöfen, wie sie für die katalytische Entbinderung von PIM-Formteilen beispielsweise in der WO 2006/134054 A2 bzw. EP 1 898 170 A2 beschrieben sind.

Bei dem Entbinderungsofen handelt es sich gemäß einer ersten bevorzugten Ausführungsform der Erfindung um einen Ofen, den die Formkörper in einer Transportrichtung durchlaufen, wobei sie für die vorstehend definierten Zeiträume auf die vorstehend definierten Temperaturen gebracht werden.

Dabei können gemäß einer Ausführungsform der Erfindung eine oder mehrere Einrichtungen vorhanden sein, die zu einer gezielt quer zur Transportrichtung der Formkörper gerichteten Strömung der Ofenatmosphäre führen.

Die zu entbindernden Formkörper werden dabei verteilt auf Transportkästen, entsprechend einer geeigneten Verweilzeit durch den Ofen hindurch transportiert. Die Transportkästen können derart gestaltet sein, dass eine gleichmäßige Umströmung der zu entbindernden Formkörper begünstigt wird. Hierfür ist es zweckmäßig, dass ein Transportkasten einen gasdurchlässigen Boden und gasdurchlässige Seitenwände aufweist, wodurch eine vertikale Durchströmung des Transportkastens und eine angestrebte Queranströmung des Formkörpers erzielt werden.

Allgemein fördert ein Transportband, entsprechend der einzustellenden Verweilzeit, die mit den zu entbindernden Formkörpern bestückten Transportkästen durch den Ofen. Hierbei ist gemäß einer Ausführungsform der Erfindung vorgesehen, dass bei einer Hin- und Rückführung des Transportbandes die Bänder beispielsweise durch ein perforiertes Blech voneinander getrennt sind. Besonders bevorzugt wird das perforierte Blech teilweise oder über die gesamte Länge des Transportbandes durch ein geschlossenes Blech ersetzt. Somit wird ein nach unten, in den Bereich der Transportbandrückführung gerichteter Kurzschlussstrom der Ofenatmosphäre minimiert. Vorteilhaft verringern Leitbleche, welche sowohl in einem oberen Bereich des Entbinderungsofens als auch im Bereich einer Transportbandförderung vorgesehen sind, Kurzschlussströme durch eine Reduzierung des freien Strömungsquerschnitts. Darüber hinaus definieren sie gemäß einer bevorzugten Ausführungsform der Erfindung einen weitgehend vertikal zur Transportrichtung gerichteten Strömungsweg der Ofenatmosphäre und verbessern somit das Umströmen der zu entbindernden Formkörper.

Leitbleche, die in dem unteren Bereich des Entbinderungsofens, in dem das Transportband läuft, vorgesehen sind, erzwingen eine vertikal nach oben gerichtete Strömung durch die Transportkästen hindurch und tragen somit zu einer homogenen Ofenatmosphäre bei.

Leitbleche, die in dem oberen Bereich des Entbinderungsofens vorgesehen sind, können an der Decke des Entbinderungsofens angeordnet sein. Bevorzugt ist eine Anordnung dieser Leitbleche an der obersten Lage der mit Formkörpern bestückten Transportkästen, da so die Höhe der auf den Transportkästen lagernden, zu entbindernden Formkörpercharge variiert werden kann.

Gemäß einer Ausführungsform der Erfindung kann der Entbinderungsofen eine oder mehrere entlang des Entbinderungsofens gleichmäßig verteilte Umwälzeinrichtungen, beispielsweise in Form von Ventilatoren, aufweisen. Durch die Umwälzeinrichtungen, die entweder nur an einer Seitenwand des Entbinderungsofens oder bevorzugt im Wechsel an zwei einander gegenüberliegenden Seitenwänden angeordnet sind, erfolgt eine Verwirbelung der Ofenatmosphäre und dadurch eine homogene Durchmischung des Innenraums des Entbinderungsofens. Gleichzeitig wird eine Effizienz steigernde Queranströmung des Formkörpers erreicht.

Eine vorteilhafte Ausführungsform sieht eine oder mehrere Einleitungsstellen für Luft, insbesondere für erwärmte Luft in den Entbinderungsofen vor. Insbesondere sind mehrere gleichmäßig verteilte Entbinderungsstellen von Vorteil, da auf diese Weise eine zusätzlich Durchmischung der Innenraumatmosphäre erreicht wird. So führt ein Einbringen vorgewärmten sauerstoffhaltigen Luft an mehreren Stellen von oben in den Entbinderungsofen, bevorzugt mit hoher Geschwindigkeit, zu einer günstigen vertikalen Strömung.

Eine weitere bevorzugte Ausführungsform des Entbinderungsofens strebt eine weitgehend quer zur Transportrichtung gerichtete Strömung der auf Transportkästen lagernden Formkörper an. Hierfür wird die zum Entbindern erforderliche Atmosphäre, insbesondere die zum Entbindern erforderliche Luft, über eine oder bevorzugt über mehrere seitlich angeordnete Einleitstellen ins Innere des Entbinderungsofens eingebracht. Diese seitlichen Einleitungsstellen können über die gesamte Länge des Entbinderungsofens gleichmäßig verteilt sein oder auch nur an einem Abschnitt desselben vorgesehen sein. Hierbei sind Einleitungsstellen an einer Seite des Entbinderungsofens und bevorzugt an zwei einander gegenüberliegenden Seiten mit im Wechsel angeordneten Einleitungsstellen denkbar. Die Einleitungsstellen können als Schlitze, als Bohrungen oder als Düsen ausgebildet sein. Die somit seitlich eingeleitete Atmosphäre durchströmt die Transportkästen und damit die zu entbindernden Formkörper weitgehend quer zu der Transportrichtung. Eine solche Queranströmung der Formkörper, welche durch die seitlichen Einleitungsstellen der Atmosphäre erreicht wird, kann durch einseitig oder beidseitig angeordnete Umwälzeinrichtungen ergänzt werden.

Bei dem Entbinderungsofen handelt es sich gemäß der nachfolgend beschriebenen zweiten bevorzugten Ausführungsform der Erfindung um einen Ofen, der in Transportrichtung der Formkörper in mindestens zwei hintereinander angeordnete Behandlungskammern unterteilt ist, durch die sich der Förderweg erstreckt. Der Ofen weist somit in Förderrichtung der Formkörper mindestens zwei hintereinander angeordnete und voneinander getrennte Behandlungskammern auf, so dass in diesen Behandlungskammern unterschiedliche thermische Behandlungen der Formkörper durchgeführt werden können. Zu diesem Zweck weist jede Behandlungskammer Einführeinrichtungen für die Behandlungsatmosphäre auf, d.h. jede Behandlungskammer wird, unabhängig von der anderen, mit der entsprechenden Atmosphäre, also mit Luft der entsprechenden Temperatur beaufschlagt. In jeder Behandlungskammer wird dabei die Atmosphäre über eine jeder Behandlungskammer zugeordnete Umwälzeinrichtung umgewälzt, so dass die die Behandlungskammer passierenden Formkörper mit der entsprechenden Atmosphäre in Kontakt kommen. Dabei sind in jeder Behandlungskammer Lufteinleiteinrichtungen vorgesehen, die eine Beaufschlagung der Formkörper mit der entsprechenden Atmosphäre quer zur Förderrichtung der Formkörper bewirken.

Durch die Querbeaufschlagung der Formkörper mit der Atmosphäre in der jeweiligen Behandlungskammer lassen sich über die Länge der Behandlungskammer im Wesentlichen gleiche Bedingungen einstellen und aufrechterhalten, da hierdurch beispielsweise Temperaturgradienten in Längsrichtung der Kammern vermieden werden. Des Weiteren können auch Formkörper mit einem besonders komplexen Aufbau gut angeströmt werden, so dass sich auch hierdurch die Entbinderung verbessern lässt. Der Entbinderungsofen kann einen oder mehrere nebeneinander angeordnete Förderwege aufweisen. Vorzugsweise weist der Entbinderungsofen zwei nebeneinander angeordnete Förderwege auf.

Besonders gute Entbinderungsergebnisse werden bei einem Entbinderungsofen erzielt, bei dem die Umwälzeinrichtungen und/oder Atmosphären Leiteinrichtungen von benachbarten Behandlungskammern so ausgebildet oder eingestellt/einstellbar sind, dass die Formkörper in den benachbarten Behandlungskammern mit der Atmosphäre aus entgegengesetzten Richtungen angeströmt werden. Dieses wechselseitige Anströmen der Formkörper von Kammer zu Kammer sorgt für einen Ausgleich von Behandlungsgradienten (Temperaturgradienten) in Längsrichtung des Ofens und stellt eine besonders gute und gleichmäßige Anströmung (von beiden Seiten) sicher. Entsprechend gute Ergebnisse werden mit einem Ofen erreicht, bei dem die Umwälzeinrichtung und/oder die Atmosphärenleiteinrichtungen einer Behandlungskammer so ausgebildet oder eingestellt/einstellbar sind, dass die Formkörper innerhalb der Behandlungskammer mit der Atmosphäre aus entgegengesetzten Richtungen beaufschlagt werden. Diese Ausführungsform unterscheidet sich von der vorstehend beschriebenen Ausführungsform dadurch, dass hierbei die wechselseitige Beaufschlagung der Teile innerhalb einer Behandlungskammer und nicht von Behandlungskammer zu Behandlungskammer erfolgt. Bei der letztgenannten Ausführungsform können dabei mehrere Behandlungskammern hintereinander geschaltet sein, in denen jeweils eine wechselseitige Beaufschlagung der Formkörper mit der entsprechenden Atmosphäre stattfindet, beispielsweise in einem Teil der Kammer von links und im anderen Teil der Kammer von rechts. Variiert die Beaufschlagungsrichtung von Kammer zu Kammer, findet beispielsweise in der einen Kammer eine Beaufschlagung von links und in der benachbarten Kammer eine Beaufschlagung von rechts statt.

Bei einer Ausführungsform mit zwei parallelen Förderwegen findet vorzugsweise in der einen Kammer eine beidseitige Beaufschlagung mit der entsprechenden Atmosphäre statt, während in der benachbarten Kammer die Atmosphäreneinführung entgegengesetzt ist, d.h. beidseitig von den Teilen weg.

Vorzugsweise kommt bei dem Ofen als Umwälzeinrichtung ein Radialgebläse zum Einsatz. Derartige Gebläse werden insbesondere dann eingesetzt, wenn sich ein einzelner Förderweg durch den Ofen hindurch erstreckt. Bei einer anderen Ausführungsform ist die Umwälzeinrichtung ein axial ansaugendes und radial ausstoßendes oder umgekehrt operierendes Gebläse. Eine derartige Ausführungsform findet insbesondere bei zwei parallelen Förderwegen der Formteile Verwendung, wobei das Gebläse zwischen den beiden Förderwegen angeordnet ist, so dass beide Förderwege entweder seitlich von außen oder von innen beaufschlagt werden. Bevorzugt befinden sich die Gebläse an der Oberseite der Behandlungskammer. Die bevorzugte Anströmrichtung der Formkörper ist seitlich. Die Atmosphärenleiteinrichtungen können jedoch auch so angeordnet sein, dass die Formkörper von unten beaufschlagt werden. Wie bereits erwähnt, ist die Umwälzeinrichtung vorzugsweise an der Unterseite der Behandlungskammer angeordnet. Es wird jedoch nicht ausgeschlossen, dass die Umwälzeinrichtung auch seitlich an/in der Behandlungskammer angeordnet sein kann. Allgemein weist jede Behandlungskammer eine Umwälzeinrichtung auf. Hierbei kann eine einzige Umwälzeinrichtung oder auch zwei durch eine Trennwand voneinander getrennte Behandlungskammerteile mit der Ofenatmosphäre beaufschlagt werden. Vorzugsweise beaufschlagt die Umwälzeinrichtung die in der Behandlungskammer angeordneten Formkörper aus einer Richtung, zweckmäßigerweise aus seitlicher Richtung von außen. Die Umwälzeinrichtung kann die in einer Behandlungskammer angeordneten Teile jedoch auch gleichzeitig aus zwei entgegengesetzten Richtungen beaufschlagen. Dies ist, wie bereits erwähnt, insbesondere dann der Fall, wenn zwei parallele Förderwege nebeneinander angeordnet sind und sich die Umwälzeinrichtung zwischen beiden Förderwegen befindet. Hierbei erfolgt vorzugsweise eine gleichzeitige Beaufschlagung der Formkörper auf den beiden Förderwegen seitlich von außen.

Der Entbinderungsofen ist ferner mit geeigneten Heizeinrichtungen versehen. Es versteht sich, dass bevorzugt jede Behandlungskammer eigene Heizeinrichtungen aufweist. Die Ausgestaltung und Anordnung dieser Heizeinrichtungen liegt dabei im Allgemeinwissen des Fachmanns.

Als Fördereinrichtung kann der Entbinderungsofen vorzugsweise ein umlaufendes Band oder eine Gleitbahn bzw. Rollenbahn mit Stoßeinrichtung aufweisen. Als Ofen können somit zweckmäßigerweise Bandöfen oder Stoßöfen zum Einsatz kommen. Die zu entbindernden Formkörper sind zweckmäßigerweise in gasdurchlässigen Chargenträgern angeordnet, die sich auf dem Förderband bzw. der Gleitbahn oder Rollenbahn durch den Ofen bewegen. Dabei können mehrere Chargenträger übereinander gestapelt sein. Da die Chargenträger gasdurchlässig sind und hierzu beispielsweise seitliche Lochwände aufweisen, ist ein guter Kontakt der Atmosphäre mit dem zu behandelnden Formkörper sichergestellt.

Gemäß einer bevorzugten Ausführungsform wird der Formkörper vor der Durchführung des Verfahrensschritts (a) mit einer Aufheizrate von 1 bis 4°C/Minute auf die Temperatur der ersten Temperaturstufe aufgeheizt. Hiermit wird sichergestellt, dass in allen Grünteilen die Entbinderung gleichzeitig beginnt, ein starker Temperaturgradient verursacht eine zu hohe Zersetzungsgeschwindigkeit und führt zu Blasen und Rissen.

Gemäß einer weiteren bevorzugten Ausführungsform der Erfindung wird der Formkörper nach Verfahrensschritt (b) mit einer Aufheizrate von 1 bis 7 °C/Minute, bevorzugt mit einer Aufheizrate von 2 bis 5 °C/Minute auf die Temperatur des dritten Entbinderungsschritts (c) aufgeheizt und dann bei auf der Temperatur des dritten Entbinderungsschritts (c) gehalten. Die Temperatur des dritten Entbinderungsschritts (c) beträgt allgemein 200 bis 600 °C, bevorzugt 300 bis 500 °C und mehr bevorzugt 400 bis 450 °C. Die Haltezeit variiert in Abhängigkeit der Formkörperzusammensetzung und beträgt allgemein 0,5 bis 4 h.

Nach der Entfernung des Binders in den Verfahrensschritten (a) (b) und (c) wird der Formkörper gesintert. Die Sinterung erfolgt nach bekannten Methoden. Je nach gewünschtem Ergebnis wird beispielsweise unter Luft, Wasserstoff, Stickstoff, unter Gasgemischen oder im Vakuum gesintert.

Die zur Sinterung optimale Zusammensetzung der Ofenatmosphäre, der Druck und die optimale Temperaturführung hängen von der exakten chemischen Zusammensetzung des eingesetzten oder herzustellenden Werkstoffs ab und sind bekannt oder im Einzelfall anhand weniger Routineversuche einfach zu ermitteln.

Die optimalen Aufheizraten werden durch einige Routineversuche leicht ermittelt, üblicherweise betragen sie mindestens 1°C/Minute, vorzugsweise mindestens 2°C/Minute und in besonders bevorzugter Weise mindestens 3°C/Minute. Aus wirtschaftlichen Erwägungen wird im Allgemeinen eine möglichst hohe Aufheizrate angestrebt. Um einen negativen Einfluss auf die Qualität der Sinterung zu vermeiden, wird jedoch meist eine Aufheizrate unterhalb von 20°C/Minute einzustellen sein. Unter Umständen ist es vorteilhaft, während des Aufheizens auf die Sintertemperatur eine Wartezeit bei einer Temperatur, die unterhalb der Sintertemperatur liegt, einzuhalten, beispielsweise über einen Zeitraum von 30 Minuten bis 2 Stunden, beispielsweise eine Stunde, eine Temperatur im Bereich von 500°C bis 700°C, beispielsweise 600°C, zu halten.

Die Sinterdauer, also die Haltezeit bei der Sintertemperatur, wird im Allgemeinen so eingestellt, dass die Sinterformteile ausreichend dicht gesintert sind. Bei üblichen Sintertemperaturen und Formgrößen beträgt die Sinterdauer allgemein 15 Minuten und vorzugsweise mindestens 30 Minuten. Die Gesamtdauer des Sintervorgangs bestimmt die Produktionsrate wesentlich, deshalb wird die Sinterung vorzugsweise so durchgeführt, dass der Sintervorgang aus wirtschaftlicher Sicht nicht unbefriedigend lange dauert. Im Allgemeinen wird der Sintervorgang (einschließlich Aufheiz-, aber ohne Abkühlphase) nach 6 bis 18 Stunden, üblicherweise nach 7 bis 12 Stunden abgeschlossen werden können.

Anschließend an die Sinterung kann jede gewünschte Nachbehandlung, beispielsweise Sinterhärtung, Austenitisierung, Anlassen, Härtung, Vergütung, Aufkohlung, Einsatzhärtung, Karbonitrierung, Nitrierung, Wasserdampfbehandlung, Lösungsglühen, Abschrecken in Wasser oder Öl und/oder heißisostatisches Pressen der Sinterformteile oder Kombination dieser Behandlungsschritte vorgenommen werden. Manche dieser Behandlungsschritte - wie etwa Sinterhärtung, Nitrierung oder Carbonitrierung - können auch in bekannter Weise während der Sinterung durchgeführt werden.

Die Erfindung wird anhand der nachfolgenden Beispiele näher charakterisiert.

### Beispiel 1

In einer Anlage, welche im Detail in EP 1898170 A2 beschrieben wird, wurden Versuche zur kontinuierlichen thermischen Entbinderung ausgeführt. Die benutzte Entbinderanlage bestand aus zwei Kammern, je mit eigener Umwälzung und Gasversorgung. Die Kästen mit Grünteilen wurden auf zwei Bahnen in die Entbinderungsanlage hineingeschoben.

Pro Transportkasten wurden auf drei Etagen je 3 kg Grünteile aus Catamold® 316LG eingefahren. In anfänglichen Vorversuchen wurde festgestellt, dass bei einer Ventilatordrehzahl von 1200 U/min sehr befriedigende Ergebnisse zu erzielen waren; Messungen ergaben, dass diese Drehzahl einer Gasgeschwindigkeit von 7 m/min über die Grünteile entsprach; unter 3 m/min wurde die Verfahrensdauer mehr als ca. 50 % länger und damit deutlich unwirtschaftlicher.

Ebenso wurde in Vorversuchen die notwendige Luftmenge ermittelt. Hier stellte sich eine Gesamtluftmenge von insgesamt 20 m³/h als ausreichend heraus; von dieser Gesamtmenge wurde 15 m³/h in die zweite Kammer und 5 m³/h in die erste Kammer eingeführt.

Bei einer Temperatur von 170 °C in der ersten und 180 °C in der zweiten Kammer und einer effektiven Verweilzeit von 7 h pro Kammer wurden die notwendigen Bedingungen für eine ausreichende Entbinderung gefunden. Die Grünteile aus Catamold 316LG zeigten einen Gewichtsverlust von 7,79 Gew-%. Für eine katalytische Entbinderung sollte der Gewichtsverlust mindestens 7,6 Gew-% betragen.

Bei nur 3 °C höheren Temperaturen waren Haarrisse auf der Oberfläche zu sehen; bei einer weiteren Erhöhung um nochmals 3 °C traten zusätzlich Blasen auf. Bei 3 °C geringeren Temperaturen waren die Grünteile intakt, aber nicht vollständig entbindert (Gewichtsverlust 7,48 Gew-%). Bei einer höheren Fördergeschwindigkeit (5 h pro Kammer) war die Entbinderung sowohl unvollständig als auch mit dem Auftreten von Haarrissen verbunden. Unter den gefundenen Bedingungen wurde ein Durchsatz an Grünteilen von ca. 0,5 kg / h im kontinuierlichen Betrieb erzielt. Die entbinderten Teile wurden unter Wasserstoff restentbindert und gesintert; dazu wurde im Bereich 20 - 600 °C eine Aufheizgeschwindigkeit von 5 °C / min gewählt. Danach wurde weiter aufgeheizt mit 10 °C / min bis auf 1380 °C. Hier wurde 3 h gehalten und wieder mit 10 °C / min abgekühlt.

Die Teile zeigten eine gute Sinterdichte von 7,93 g/ml auf, also 99,2 % der theoretischen Dichte dieser Legierung.

### Beispiel 2

In der gleichen Anlage wurden nun Versuche mit Catamold 17-4PHW ausgeführt. Nach Durchführung ähnlicher Optimierungsarbeiten wurde festgestellt, dass nur die Temperaturen und Verweilzeiten leicht angepasst werden mussten. Gute entbinderte Teile wurden nun bei 8 h Verweilzeit pro Kammer und bei 172 °C in der ersten und 180 °C in der zweiten Kammer gefunden. Die Teile wiesen einen Gewichtsverlust von 7,38 Gew-% aus. Für die katalytische Entbinderung sollte der Gewichtsverlust 7,2 % überschreiten.

Beim Sintern unter Wasserstoff unter den gleichen Bedingungen wie in Beispiel 1, nur bei 1350 °C Sintertemperatur, wurde eine Sinterdichte von 7,63 g / ml erreicht. Dies entspricht eine Sinterdichte von 98,8 % der Theorie.

### Beispiel 3

In der gleichen Anlage wurden Versuche mit einem Entwicklungsprodukt, basierend auf Reinkupferpulver ausgeführt. Weil dieses Material sich noch in der Entwicklung befand und keine große Mengen an Produkt zur Verfügung standen, wurde die Beladung mit Grünteilen aus Catamold 17-4PHW als Nutzlast simuliert; diese wurden auf der unteren und auf der oberen Etagen beladen, während auf der mittleren Etage Grünteile aus dem Cu-Feedstock positioniert wurden.

Nach Durchführung der Optimierung waren korrekt entbinderte Grünteile bei einer Verweilzeit von 6 h je Kammer und bei einer Temperatur von 195 °C in der ersten und 200 °C in der zweiten Kammer erhalten. Der Gewichtsverlust in der thermischen Entbinderung betrug 7,5 Gew-%. Der Vergleichswert der katalytische Entbinderung stand nicht als Orientierungshilfe zur Verfügung, weil das Cu-Pulver mit gasförmiger Salpetersäure unter Nitratbildung reagiert und die Poren dadurch verstopft werden. Derartig entbinderte Teile wurden unter Wasserstoff in einem ähnlichen Zyklus wie im Beispiel 1, nur bei einer Sintertemperatur von 1050 °C zu einer Dichte von 8,71 g/ml gesintert; dies entspricht 96,7 % der Theorie.

## Patentansprüche

1. Verfahren zum kontinuierlichen thermischen Entbindern eines durch Spritzgießen, Extrudieren oder Verpressen unter Verwendung einer thermoplastischen Masse hergestellten metallischen und/oder keramischen Formkörpers, enthaltend als Bindemittel mindestens ein Polyoxymethylenhomo- oder -copolymerisat, in einem Entbinderungsofen umfassend die Schritte
(a) Entbindern des Formkörpers in einem Entbinderungsofen bei einer Temperatur die 5 bis 20 °C unterhalb der Temperatur einer zweiten Temperaturstufe liegt über einen Zeitraum von 4 bis 12 Stunden in einer ersten Temperaturstufe in sauerstoffhaltiger Atmosphäre,
(b) Entbindern des Formkörpers bei einer Temperatur im Bereich von > 160 bis 200°C über einen Zeitraum von 4 bis 12 h in sauerstoffhaltiger Atmosphäre in einer zweiten Temperaturstufe, und
(c) Entbindern des Formkörpers bei einer Temperatur im Bereich von 200 bis 600 °C über einen Zeitraum von 2 bis 8 h in einer dritten Temperaturstufe, in sauerstoffhaltiger oder in neutraler oder reduzierender Atmosphäre,
wobei der Formkörper während der Verfahrensschritte (a) und (b) durch den Entbinderungsofen transportiert wird.

2. Verfahren nach Anspruch 1, wobei der Formkörper vor der Durchführung des Verfahrensschritts (a) mit einer Aufheizrate von 1 bis 4°C/Minute auf die Temperatur der ersten Temperaturstufe aufgeheizt wird.

3. Verfahren nach Anspruch 1 oder 2, wobei man die Verfahrensschritte (a), (b) und (c) in dem gleichen Entbinderungsofen durchführt und der Formkörper während der Verfahrensschritte (a), (b) und (c) durch den Entbinderungsofen transportiert wird.

4. Verfahren nach Anspruch 1 bis 3, wobei man als Entbinderungsofen einen Ofen mit mindestens zwei hintereinander geschalteten Behandlungskammern verwendet.

5. Verfahren nach einem der Ansprüche 1 bis 4, wobei man als Entbinderungsofen einen Ofen verwendet, der Gasleiteinrichtungen aufweist, die eine Beaufschlagung des Formkörpers mit der sauerstoffhaltigen Atmosphäre während des Verfahrensschritts (a) und/oder (b) und/oder (c) quer zur Förderrichtung des Formkörpers bewirken.

6. Verfahren nach einem der Ansprüche 1 bis 5 zur Entbinderung keramischer Formkörper.

7. Verfahren nach einem der Ansprüche 1 bis 5 zur Entbinderung metallischer Formkörper.

8. Verfahren zur Herstellung von metallischen und/oder keramischen Formkörpern aus einer thermoplastischen Masse, durch
(d) Verformen der thermoplastischen Masse durch Spritzgießen, Extrudieren oder Verpressen zu einem Grünkörper,
(e) Entfernen des Bindemittels durch ein Verfahren gemäß Anspruch 1 und
(f) nachfolgendes Sintern des in Schritt (e) entbinderten Grünkörpers.

## Claims

1. A process for the continuous thermal removal of binder from a metallic and/or ceramic shaped body which has been produced by injection molding, extrusion or pressing using a thermoplastic composition and comprises at least one polyoxymethylene homopolymer or copolymer as binder in a binder removal oven, which comprises the steps
(a) Removal of binder from the shaped body in a binder removal oven at a temperature which is from 5 to 20°C below the temperature of a second termperature stage over a period of from 4 to 12 hours in a first temperature stage in an oxygen-comprising atmosphere,
(b) Removal of binder from the shaped body at a temperature in the range > 160 to 200°C over a period of from 4 to 12 hours in an oxygen-comprising atmosphere in a second temperature stage and
(c) Removal of binder from the shaped body at a temperature in the range from 200 to 600°C over a period of from 2 to 8 hours in a third temperature stage in an oxygen-comprising or neutral or reducing atmosphere,
with the shaped bodies being transported through the binder removal oven during process steps (a) and (b).

2. The process according to claim 1, wherein the shaped body is heated to the temperature of the first temperature stage at a heating rate of from 1 to 4°C/minute before process step (a) is carried out.

3. The process according to claim 1 or 2, wherein process steps (a), (b) and (c) are carried out in the same binder removal oven and the shaped body is transported through the binder removal oven during process steps (a), (b) and (c).

4. The process according to any of claims 1 to 3, wherein an oven having at least two successive treatment chambers is used as binder removal oven.

5. The process according to any of claims 1 to 4, wherein an oven having gas guide devices which effect the flow of the oxygen-comprising atmosphere onto the shaped body transverse to the transport direction of the shaped body during process step (a) and/or (b) and/or (c) is used as binder removal oven.

6. The process according to any of claims 1 to 5 for the removal of binder from ceramic shaped bodies.

7. The process according to any of claims 1 to 5 for the removal of binder from metallic shaped bodies.

8. A process for producing metallic and/or ceramic shaped bodies from a thermoplastic composition by
(d) shaping of the thermoplastic composition by injection molding, extrusion or pressing to form a green body,
(e) removal of the binder by a process according to claim 1
(f) subsquent sintering of the green body from which the binder has been removed in step (e).

## Revendications

1. Procédé pour le déliantage thermique continu d'un corps moulé métallique et/ou céramique fabriqué par moulage par injection, par extrusion ou par compression à l'aide d'une masse thermoplastique, contenant, comme liant, au moins un homopolymère ou copolymère de polyoxyméthylène, dans un four de déliantage, comprenant les étapes de
(a) déliantage du corps moulé dans un four de déliantage à une température qui est inférieure de 5 à 20°C à la température d'un deuxième étage de température pendant une période de 4 à 12 heures dans un premier étage de température sous une atmosphère contenant de l'oxygène,
(b) déliantage du corps moulé à une température dans la plage de > 160 à 200°C pendant une période de 4 à 12 heures sous une atmosphère contenant de l'oxygène dans un deuxième étage de température et
(c) déliantage du corps moulé à une température dans la plage de 200 à 600°C pendant une période de 2 à 8 heures dans un troisième étage de température sous une atmosphère contenant de l'oxygène ou neutre ou réductrice,
le corps moulé étant transporté à travers le four de déliantage pendant les étapes de procédé (a) et (b).

2. Procédé selon la revendication 1, le corps moulé étant chauffé, avant la réalisation de l'étape de procédé (a), à une vitesse de chauffage de 1 à 4°C/minute à la température du premier étage de température.

3. Procédé selon la revendication 1 ou 2, les étapes de procédé (a), (b) et (c) étant réalisées dans le même four de déliantage et le corps moulé étant transporté à travers le four de déliantage pendant les étapes de procédé (a), (b) et (c).

4. Procédé selon la revendication 1 à 3, un four présentant au moins deux chambres de traitement disposées l'une derrière l'autre étant utilisé comme four de déliantage.

5. Procédé selon l'une quelconque des revendications 1 à 4, un four présentant des dispositifs d'introduction de gaz, qui provoquent la soumission du corps moulé à une atmosphère contenant de l'oxygène pendant l'étape de procédé (a) et/ou (b) et/ou (c) transversalement par rapport au sens de transport du corps moulé, étant utilisé comme four de déliantage.

6. Procédé selon l'une quelconque des revendications 1 à 5 pour le déliantage de corps moulés céramiques.

7. Procédé selon l'une quelconque des revendications 1 à 5 pour le déliantage de corps moulés métalliques.

8. Procédé pour la fabrication de corps moulés métalliques et/ou céramiques à partir d'une masse thermoplastique par
(d) façonnage de la masse thermoplastique par moulage par injection, par extrusion ou par compression en un corps cru,
(e) élimination du liant par un procédé selon la revendication 1 et
(f) frittage consécutif du corps cru délianté dans l'étape (e).
